# EUROPEAN PATENT SPECIFICATION

(11) **EP 2 951 703 B1**
(45) Date of publication and mention of the grant of the patent: **08.04.2020**
(21) Application number: 14745756.8
(22) Date of filing: 31.01.2014
(51) Int. Cl.: G06F 12/16, G06F 12/14, G06F 3/06, G06F 11/14, H04L 9/32, H03M 7/30, H03M 7/40, G06F 16/901

(54) **REDUCED REDUNDANCY IN STORED DATA**
VERMINDERTE REDUNDANZ BEI GESPEICHERTEN DATEN
RÉDUCTION DE REDONDANCE DANS DES DONNÉES STOCKÉES

(30) Priority: 01.02.2013 US 201313756921; 12.03.2013 US 201313797093; 03.06.2013 US 201313908239
(43) Date of publication of application: 09.12.2015
(73) Proprietor: Symbolic IO Corporation, Holmdel, NJ 07733 (US)
(72) Inventor: IGNOMIRELLO, Brian, Colts Neck, NJ 07722 (US); LIANG, S'uihong, Martinsville, NJ 08836 (US)
(74) Representative: HGF Limited
(86) International application number: PCT/US2014/014225
(87) International publication number: WO 2014/121109

(56) References cited:
- US-A1- 2009 307 251
- US-A1- 2012 124 282
- US-A1- 2012 159 282
- US-A1- 2012 166 448
- US-A1- 2012 239 860
- US-A1- 2013 013 618
- US-B1- 8 200 923

## Description

### Field of the Invention

The present invention relates to the storage of data.

### Background of the Invention

The twenty-first century has witnessed an exponential growth in the amount of digitized information that people and companies generate and store. This information is composed of electronic data that typically is stored on magnetic surfaces such as disks. These disks contain small regions that are sub-micrometer in size and are capable of storing individual binary pieces of data.

Within the vast amount of data that any given entity stores, often there is significant duplication of information. For example, the same company letterhead may appear in thousands of documents, and each file that corresponds to this data will contain the bits that code for the letterhead. Historically, many entities have accepted that this type of duplication exists in their files, and that the inefficiency of redundant storage of the same information is a cost of doing business.

As the cost for storage has been increasing and the availability of storage has been decreasing, entities have begun to explore means by which to store fewer than all of the duplicative information within or among files. In theory, entities that seek to avoid the storage of duplicative information or to minimize the number of times that duplicative information is stored could seek to identify unique bit or byte patterns within their data set and store the unique bit or byte patterns a minimal number of times. In order to carry out these methods, as new files are being prepared for storage, information within those files would be compared to reference sets of already stored information, and only if the bit or byte pattern that is being considered is unique, would it be stored. If it were not unique, then the redundant data would be replaced with a reference that is smaller in size than the data that points to the stored data of which it is a duplicate.

The goal of reducing the number of times that duplicative information is stored presents a number of challenges, including but not limited to: (1) maintaining a sufficient speed by which to check for redundancy; (2) maintaining a sufficient speed in data reconstitution for retrieval; (3) ensuring that data is not lost during the processes of either checking for redundancy or storing information that corresponds to the original file; (4) protecting against unauthorized access to the stored information; and (5) providing efficient technologies and methods that may be used in connection with one or more if not all of taking snapshots of data, cloning data and restoring data. Various embodiments of the present invention are directed to overcoming one or more of these challenges.

### Summary of the Invention

The present invention is defined by the appended independent claims. It provides methods, systems and computer program products for improving the efficiency of storing and retrieving data, while minimizing the degree to which redundant data is unnecessarily stored a plurality of times. By using various embodiments of the present invention, one can efficiently store and access data. Through these various embodiments of the present invention one may transform data and/or change the physical devices on which transformed or converted data is stored. This may be accomplished through automated processes that employ a computer that comprises or is operably coupled to a computer program product that when executed carries out one or more of the methods or processes of the present invention. These methods or processes may, for example, be embodied in or comprise a computer algorithm or script and optionally be carried out by a system through one or more modules.

According to a first embodiment, the present invention is directed to a method for storing data on a non-cache recording medium, the method comprising: (i) receiving instructions to write data to a non-cache recording medium, wherein the instructions comprise a user perceived logical block address ("LBA") and a user supplied buffer, wherein the user supplied buffer consists of, for example, from 512 Bytes to 2 megabytes or from 512 Bytes to 64K; (ii) dividing the user supplied buffer into user supplied buffer units and applying a cryptographic hash function to the each of the user supplied buffer units, thereby generating a generated hash value; (iii) activating a computer program product that comprises an algorithm that causes the computer program product to access a hash value table and to determine whether the generated hash value is duplicative of a stored hash value within the hash value table, wherein the hash value table correlates each of a plurality of stored hash values with a different stored buffer unit and a true logical block address; and (A) if the generated hash value is not within the hash value table, then writing the user supplied buffer unit to a block in a non-cache recording medium, updating the hash value table to include a correlation of the user supplied buffer unit, the generated hash value and a true logical block address at which the user supplied buffer unit is stored, and writing on a mediator the true logical block address that corresponds to where the user supplied buffer unit has been written and the user perceived logical block address (or addresses) for the user supplied buffer, and (B) if the generated hash value is duplicative of a stored hash value within the hash value table, querying whether there is a conflict, wherein a conflict is defined as the circumstance in which the same hash value is associated with a stored buffer unit and the current user supplied buffer unit and the two buffer units have different contents, and (a) if there is a conflict, writing the user supplied buffer unit to a block in the non-cache recording medium, rendering inactive or deleting an association within the hash value table between the stored buffer unit and the stored hash value, updating the hash value table to include a correlation of the user supplied buffer unit, the generated hash value and a true logical block address at which the user supplied buffer unit is stored, and writing on the mediator the true logical block address that corresponds to where the user supplied buffer unit has been written and the user perceived logical block address; and (b) if there is no conflict, writing on the mediator the true logical block address of a buffer unit stored on the non-cache recording medium that is the same as the user generated buffer unit and correlating it with the user perceived logical block address for the user supplied buffer without writing the user supplied buffer unit on the non-cache recording medium.

In step (A) when writing the user supplied buffer unit, persons of ordinary skill in the art will appreciate that the methods call for writing the user supplied buffer unit that has been determined not to be associated with a hash value in the table.

Often, the user will supply data (the user supplied buffer) that is in a stream or in units that are larger than the user supplied buffer units for which the hash value algorithm is configured to accept as input. In these cases, the user supplied buffer units may be formed by fragmenting (also referred to as breaking) the raw data sent by a host into smaller units, which may be deemed the user supplied buffer units, regardless of whether the host fragments them or the systems or methods of the present invention do so. Thus, these fragmented user supplied buffer units may server as the input for the cryptographic hash function. By way of non-limiting example, the user supplied data may be from 16K to 2MB and each fragmented user supplied buffer unit is from 512 Bytes to 4K, *e.g.,* 512 Bytes or 4K. Thus, in some embodiments, the fragmented user supplied buffer unit is no more than ¼th or no more than 1/16th or no more than 1/64th the size of the user supplied buffer prior to fragmentation. If the step of fragmentation is used prior to entering the hash value algorithm, then the hash value table would contain a correlation of the user supplied buffer units and hash values, the writings to the storage device would be fragmented user supplied buffer units and not the larger data buffer units and the mediator would correlate the user perceived address (or addresses) of the user supplied buffer units with the plurality of fragmented user supplied buffer units.

The various steps of the methods of the present invention may be stored in one or more modules, *e.g.,* a receipt of buffer and user perceived logical block address module, a fragmentation module, a hash value search module, a duplication of a hash value analysis module, a conflict model, and a writing module. Similarly, there may be a reading and reconstitution of files module. These modules may be stored in a non-transitory medium in the form of executable code.

According to a second embodiment, the present invention provides a system for storing data, wherein the system comprises: (a) persistent memory, wherein the persistent memory stores a hash value table that is configured to associate a stored buffer unit with a stored hash value and a true logical block address; (b) a central processing unit that comprises or is operably coupled to a computer program product that is stored in a non-transitory medium, wherein the computer program product comprises executable code that when executed, automatically, (i) applies a hash value algorithm to each of one or more user supplied buffer units to generate a generated hash value; and (ii) determines whether the generated hash value is a duplicate of a stored hash value within the hash value table that is associated with a stored buffer unit, and if so, determines whether a conflict exists, wherein the conflict is defined as a hash value being associated with two different buffer units and if a conflict exists, updating the hash value table to cause the hash value within the table to be associated with the user supplied buffer unit and not the stored buffer unit; (c) a non-cache recording medium, wherein the non-cache recording medium is configured for block level storage; and (d) a mediator, wherein the mediator stores a correlation of a true logical block address with a user perceived logical block address.

According to a third embodiment, the present invention provides a computer program product comprising a non-transitory computer useable medium including a computer readable program, wherein, the computer readable program when executed on a computer causes the computer to implement a method for de-duplicating and managing data blocks within a file system comprising any of the methods of the present invention. These methods may be organized in one or more modules.

Through the various embodiments of the present invention, one can increase the efficiency of storing and retrieving data, because in most circumstances, large buffer units that are duplicative of previously written data will not need to be rewritten to a non-cache recording medium (NCM). Instead, a pointer on a mediator that is smaller in size than and is within a structure that is physically separate from the storage unit that houses the data to which it points will direct the computer to a previously stored copy of that data. The increased efficiency may be realized by using less storage space than is used in commonly applied methods and investing less time and effort in the activity of storing and/or retrieving information. Further in some embodiments, the present invention leads to increased speed in storing and retrieving documents. Thus, the technologies and methodologies of the present invention help to reduce the total amount of physical storage that is required to store data. This is accomplished by minimizing the number of times that duplicative data is written and is stored and, in the cases in which there is duplicative data, using a mediator to point to previously stored data.

### Brief Description of the Figures

**Figure 1** is a representation of a method for writing data according to an embodiment of the present invention.
**Figure 2** is a representation of a protocol for resolving a conflict according to a method of the present invention.
**Figure 3** is a representation of a method for reading information according to an embodiment of the present invention.

### Detailed Description of the Invention

Reference will now be made in detail to various embodiments of the present invention, examples of which are illustrated in the accompanying figures. In the following detailed description, numerous specific details are set forth in order to provide a thorough understanding of the present invention. However, unless otherwise indicated or implicit from context, the details are intended to be examples and should not be deemed to limit the scope of the invention in any way.

### Definitions

Unless otherwise stated or implicit from context the following terms and phrases have the meanings provided below.

The term "bit" refers to a binary digit. It can have one of two values. Each value may be represented by either 0 or 1.

The term "block" refers to a sequence of bytes or bits of data having a predetermined length. On a recording medium, the physical media may be divided into units that are defined by a block size. Each block on a recording medium may be identified by a logical block address. In the industry, currently, 512 bytes is the standard size of a block. However, there is a movement to using 4096 bytes as a standard. Additionally, as persons of ordinary skill in the art will appreciate, frequently the phrases "block size" and "sector size" are used interchangeably by persons of ordinary skill in the art.

The phrases "bootability code," "bootability information" and "bootability feature" refer to information that provides the means by which to enter a bootable state and may be stored on a boot sector. A boot sector may contain machine code that is configured to be loaded into RAM (random access memory) by firmware, which in turn allows the boot process to load a program from or onto a storage device. By way of example, a master boot record may contain code that locates an active partition and invokes a volume boot record, which may contain code to load and to invoke an operating system or other standalone program.

The phrase "buffer unit" refers to a series of bits that are of a size that is compatible for use as input into a hash value algorithm. The buffer unit may be the same size as a chunklet. However, in some embodiments, it may be a fraction of the size of a chunklet or a multiple of a size of a chunklet.

The term "byte" refers to a sequence of eight bits.

The term "cache" refers to the location in which data is temporarily stored in order for future requests for the data to be served faster or for the purposes of buffering. The L1 cache (level 1 cache) refers to a static memory that is, for example, integrated with a processor core. The L1 cache may be used to improve data access speed in cases in which the CPU (central processing unit) accesses the same data multiple times. The L2 cache (level 2 cache) is typically larger than the L1 cache, and if a data file is sought but not found in a L1 cache, a search may be made of a L2 cache prior to looking to external memory. In some embodiments, the L1 cache is not within a central processing unit. Instead, it may be located within a DDR, DIMM or DRAM. Additionally or alternatively, L2 cache may be part of PCI2.0/3.0, which goes into a motherboard. Thus, each of L1 cache and L2 cache may be in separate parts of a motherboard. In some embodiments, when the methods of the present invention are implemented, a hash value table resides in L2 cache.

The term "chunklet" refers to a set of bits that may correspond to a sector cluster. The size of a chunklet is determined by the storage system and may have a chunklet size. Traditionally, the chunklet size was derived by the CHS scheme, which addressed blocks by means of a tuple that defined the cylinder, head and sector at which they appeared on hard disks. More recently, the chunklet size has been derived from the logical block address (LBA) measurement. By way of example, the chunklet size may be 512B, 1K, 2K, 4K, 8K, 16K, 32K, 64K or 1MB. As persons of ordinary skill in the art are aware 1K = 1024B. Chunklets may be received as raw data from a host.

The term "conflict" refers to the occurrence of the generation of the same output, *e.g.,* hash value by a function, such as a hash value algorithm, for different inputs, *e.g.,* buffer units.

A "file" is a collection of related bytes or bits that combine to provide a file of a size with a length that may be measured in bits or bytes. A file may be smaller than a chunklet, the same size as a chunklet or larger than a chunklet.

The phrase "file name" refers to a notation or code that permits a computer to identify a specific file and to distinguish that file from other files.

The phrase "file system" refers to an abstraction that is used to store, to retrieve and to update a set of files. Thus, the file system is the tool that is used to manage access to the data and the metadata of files, as well as the available space on the storage devices that contain the data. Some file systems may, for example, reside on a server. Examples of file systems include but are not limited to the Unix file system and its associated directory tables and inodes, Windows FAT16 and FAT32 file systems (FAT refers to File Allocation Table), Windows NTFS, which is based on master file tables, and Apple Mac OSX, which uses HFS or HFS plus.

The phrases "hash function," "cryptographic hash function," "cryptographic hash function value algorithm" and "hash function value algorithm" refer to an algorithm or subroutine that maps large data sets (of the same or variable lengths) to smaller data sets that have a fixed length for a particular hash function. A "hash function value" refers to the output that is returned after application of a hash function algorithm. The values that the algorithm returns may also be called hash values, hash codes, hash sums, checksums or hashes. When, for example, using MD5, the output is 128 bits, whereas when using SHA-1, the output is 160 bits. Thus, in some embodiments the hash value is from 32 -512 bits in length.

The terms "host," "user" and "initiator" may be used interchangeably and refer to the entity or system that sends data for storage to the data storage and retrieval mediation system of the present invention. The host may send data that corresponds to one or more types of documents or files and receive data. Preferably, within any input/output ("I/O") stream, the data corresponds to a file of a single document type.

The terms "including" and "comprising" are used in an open-ended fashion and thus should be interpreted to mean "including but not limited to."

The abbreviation "LBA" refers to "logical block addressing" or a "logical block address." LBA is a linear addressing scheme and is a system that is used for specifying the location of blocks of data that are stored in certain storage media, *e.g.,* hard disks. In a LBA scheme, blocks are located by integer numbers and only one number is used to address data. Typically, the first block is block 0. A user may believe that data is stored on a particular LBA. The location at which a user perceives data to be stored is a "user perceived logical block address." This may be different from where the data is actually stored. The location at which data is actually stored on a NCM may be referred to as a "true logical block address."

The abbreviation "LUN" refers to a logical unit number and is a number that is used to identify a logical unit. LUNs are commonly used to manage block storage arrays that are shared over a SAN.

The term "manager" refers to a computer program product, *e.g.,* code that may be stored in a non-transitory medium and that causes one or more other actions to be taken, *e.g*., receiving, transmitting or processing data. It may be stored on hardware, software or a combination thereof. In some embodiments, the manager may be part of a computer and/or system that is configured to permit the manager to carry out its intended function.

The term "mediator" refers to a computer program product that may be stored on hardware, software or a combination thereof, and that correlates one or more units of storage space within at least one non-cache medium with a file name. Thus, it may correlate a user perceived LBA with a true LBA. A mediator may be orders of magnitude smaller than the non-cache medium to which it points. For example, it may be approximately as small as about 0.2% of the size of a typical cylinder. In some embodiments, the mediator exists in a computing cloud, whereas in other embodiments, it exists in a non-transitory tangible recording medium. The mediator may be able to organize, to translate, to convert and to control the storage of data in locations that hosts perceive as being in certain tracks of recording media while actually occurring in different tracks of recording media or it may be operably coupled to a manager that serves one or more if not all of these functions. Furthermore, the mediator may comprise a sector map, a table or other organization of data that may be located within a physical device or structure, and thus the contents of the mediator may cause the physical device or structure to have certain geometry. In some embodiments, the mediator resides on L2 cache.

The term "metadata" refers to the administration information about containers of data. Examples of metadata include, but are not limited to, the length or byte count of files that are being read; information pertaining to the last time files were modified; information that describes file types and access permissions; and LUN QoS, VM and WORM. Other types of metadata include operating system information, auto-initialization information, group permissions, and frequency of bits within the document type.

The abbreviation "NCM" refers to a non-cache recording medium. Examples of NCMs include, but are not limited to, hard disks and solid state drives. An NCM may, for example, be configured to hold 100 terabytes bytes of data. The NCM stores the unique buffer units. In some embodiments, the NCM also stores a digest map, which contains the associations of the buffer units and stored hash values. These stored associations may be used to populate the hash value table in the RAM of a server. By populating the RAM with this information from the persistent storage of the NCM, fast loading may be accomplished. Additionally or alternatively, the NCM stores a bit map of 1 bit per unit block, which may be used to track the storage savings of the present invention. As a matter of practicality, the storage of the digest map and bit map require a small overhead of between 5 and 10 bytes, *e.g.,* 8.125 bytes per block of stored data on the NCM. Alternatively, the digest map and bit map may be stored on different storage media than store the buffer units that are written as a results of the methods or uses of systems of the present invention.

The phrase "operably coupled" is used interchangeably with the term "coupled" and means that systems, devices and/or modules are configured to communicate with each other or one another and are able to carry out their intended purposes when in communication or after having communicated. The phrase and term include indirect, direct, optical, wired or wireless connections. Thus, if a first device is operably coupled to a second device, that connection may be through a direct electrical connection, through an indirect electrical connection via other devices and connections, through an optical connection or through a wireless connection or a combination thereof.

The phrase "operating system" refers to the software that manages computer hardware resources. Examples of operating systems include but are not limited to Microsoft Windows, Linux, and Mac OS X.

The term "partition" refers to formats that divide a storage medium, *e.g.,* a disk drive into units. Thus, the partition may also be referred to as a disk partition. Examples of partitions include, but are not limited to, a GUID partition table and an Apple partition map.

The phrase "recording medium" refers to a non-transitory tangible computer readable storage medium in which one can store magnetic signals that correspond to bits. By way of example, a recording medium includes, but is not limited to, a NCM, such as a hard drive, a hard disk, a floppy disk, a computer tape, ROM, EEPROM, nonvolatile RAM, CD-ROM and a punch card.

The term "sector" refers to a subdivision of a track on a disk, for example, a magnetic disk. Each sector stores a fixed amount of data. Common sector sizes for disks are 512 bytes (512B), 2048 bytes (2048B), and 4096 bytes (4K). If a chunklet is 4K in size and each sector is 512B in size, then each chunklet corresponds to 8 sectors (4^{∗}1024/512 = 8). Sectors have tracks and are located on platters. Commonly, two or four platters make up a cylinder, and 255 cylinders make up hard disk and media devices.

The phrase "sector map" refers to the tool that receives calls from a host and correlates locations in a storage device where a file is stored. A sector map may, for example, operate under parameters that are defined by an iSCSI (internet small computer system interface) protocol. In some embodiments of the present invention, the sector map may be located in a bit field of a mediator.

The term "track" refers to a circular unit within a disk that transverses all sectors. A "track sector" is a track within any one sector. A "track cluster" spans more than one sector.

### Preferred embodiments

The present invention provides methods for storing data on a non-cache recording media, computer program products for carrying out these methods, and systems that are configured to carry out these methods. Through various embodiments of the present invention, one can efficiently store and retrieve data by decreasing the number of times that duplicative data is stored.

According to one embodiment, the present invention provides a method for storing data on a non-cache recording medium. In some embodiments, the data that is received is comprised of, consists essentially of, or consists of a user defined logical block address (LBA) and a user supplied buffer. The size of the user supplied buffer may, for example, be from 512 Bytes to 64K or even higher, *e.g.,* up to 2 megabytes. The data that is received may be in the format of (LBAₓ, bufferₓ), wherein x=1 to n and n= the number of buffer that the user sends. The buffers are raw data and thus they may correspond to any document type, *e.g.,* JPEGs, PDFs, WORD documents, MPEGs and TXT documents.

The total stream that a user sends may be in the form N Bytes. The stream may be received over a network that is wired or wireless and through known methods and technologies for transmitting I/O streams. The user may format the data in the format: (LBAₓ, bufferₓ) or the user may send the data to a server that formats the data into this format. Thus, N may be larger than the size of a buffer unit. Preferably, the user transmits the data with a file name and/or file identifier.

When N is larger than the size of the buffer unit, after receipt of the stream of data, the server may fragment the N Bytes into buffer units. Thus, a buffer is a stream of data that may be of any size, but a buffer unit is of a fixed size and corresponds to the size of the storage units on the NCM. For example, a user may send a single buffer of 1024 Bytes with a designation for the file to begin a LBA10. If the buffer unit size of the implementation of the invention is 512 Bytes, the data may be stored at LBA20 and LBA21. Notably, in some embodiments, a user may transmit only the starting LBA and its system will perceive the file to be stored on the NCM beginning at that address and stretching to consecutive blocks so that there is sufficient room for the file.

This fragmentation may be performed on the total stream or on chunklets. For example, if the method is configured to receive buffer units of 4K in size, but the user transmits chunklets that are 16K in size, after or as the server receives the chunklets, it will initiate a protocol for dividing each chunklet into four buffer units that are each 4K in size. Thus, according to some methods, one receives the data in the form of (LBAₓ, bufferₓ) or converts the data that it receives into this form. Regardless of whether the user supplies the data in packets that are configured to be of the requisite buffer unit size, or are converted to that size, each of the buffer units that serves as input for the hash value algorithm is referred to as a "user supplied buffer unit."

After the data is received in (or converted into) the correct form, a cryptographic hash function value algorithm is applied to each buffer unit to form a generated hash value for that buffer unit. The hash value that is generated may be referred to as a generated hash value. The cryptographic hash value algorithm may, for example, be in the form of a computer program product or protocol within a computer program product that is stored in a non-transitory storage medium. Examples of these types of algorithms include, but are not limited to, MD5 hash (also referred to as a message digest algorithm), MD4 hash and SHA-1. The value that is output from a hash function value algorithm may be referred to as a hash value, a checksum or a sum. In some examples, the hash value is 64, 128 or 256 bits or 8 Bytes in size or any value in between. Because of the highly repetitive nature of data within I/O streams, the probability of generating conflicting hash values, *i.e.* hash values that are the same but correspond to different buffer units, is relatively low. The method may obtain hash values according to a first in first out ("FIFO") protocol and either begins accessing the correlation file while an I/O stream is being received, while hash values are being generated, or after all I/O streams have been received, fragmented, if necessary, and subjected to the hash function value algorithm.

After a generated hash value is obtained for a user supplied buffer unit, a different computer program product or a different module within the same computer program product that produced the generated hash value is accessed. This computer program product accesses a hash value table. The hash value table may, for example, be stored in persistent memory, and called into L2 cache for access and use. Within the hash value table, a plurality of stored hash values are each associated with a different stored buffer unit within a set of stored buffer units and a true LBA of the buffer unit on a NCM. The phrase, "stored hash value" is used to contrast a hash value that is generated by the hash value algorithm for a particular user supplied buffer unit, which may be referred to as a generated hash value.

A hash value table may initially be populated with a set of known hash values and buffer units as associated by a particular hash value algorithm. These known values may have been determined based on empirical prior uses of the algorithm, *e.g*., those previously generated for a host's files or the files of a host in a similar industry. Alternatively, it may initially be empty and the first user supplied buffer unit is compared to a null set of associations. When in use, the hash value table may reside in RAM on for example, a server. Thus, the hash value table or the data to populate it may reside in persistent storage, such as on the NCM that stores buffer units or elsewhere in a format that can be accessed for repopulation of RAM upon booting or rebooting of the system. When updated, the updates are made to the table in RAM and also to the persistent memory.

In some embodiments, at any time, within the table, a given stored hash value is actively associated with no more than one buffer unit. When a buffer unit is within the hash value table and is associated with a stored hash value, the buffer unit is a "stored buffer unit." The buffer unit that is associated with a particular hash value within a hash value table may change over time, and in the case of a conflict as described below, the most recent buffer unit, hash value association determined by the hash value algorithm will be, after application of the methods described herein, the active association within the table. The phrases "active association" and "actively associated" refer to the condition by which the table provides, configures or denotes data to be extracted for comparison to a generated hash value. The active association may include the true logical block address on the NCM that most recently received the buffer unit that led to generation of the hash value upon application of the hash value algorithm. Once a hash value becomes a stored hash value, it will remain in the table; however, over time, the buffer unit with which it is associated may change. Thus, a stored buffer unit might not remain a stored buffer unit.

Persons of ordinary skill in the art will recognize that in certain embodiments, rather than using a hash value table, one may use a multimap. When using a multimap, a hash value may be associated with more than one buffer unit and thus previously stored hash values need not be removed when there is a conflict.

Because a hash value algorithm can generate the same hash value for a plurality of different buffer units, a procedure is needed to determine how to treat these occurrences within the table. When a hash value has been generated for a user supplied buffer unit that is the same as a stored hash value, one of three procedures may be used: (1) the pre-existing association may be written over with the new association; (2) the pre-existing association may be deleted, and a new entry may be made in the table at for example a new location; or (3) the pre-existing association may be moved to an inactive file or otherwise modified to denote that it is inactive, but the information is retained in, for example, an archive file, and through appropriately designed computer programs, can be accessed at a later time. Conditions (1) or (3) are examples of rendering an association inactive. As persons of ordinary skill in the art will recognize, because data retrieval from the NCM does not require access to the hash value table, any archived information is not needed for implementation of various embodiments of the present invention. However, this information may be used to review the degree to which the same hash value is generated for different user supplied buffer units or fragmented user supplied buffer units.

Due to the highly repetitive nature of data, the probability of conflicting hash values being generated as a result of application of the hash value algorithm is low. For example, SHA-1's 160 bit hash has a probability of randomly generating the same hash value for different patterns of 1 in 10²⁴. The present invention makes use of this feature of hash value algorithms in order to minimize the extent to which duplicative buffer units are to be stored. In order to accomplish this, the methods provide for the allocation of two modules or two separate computer program algorithms that query: (1) is the newly generated hash value the same as a stored hash value for which there is a stored buffer unit?; and if so, (2) is there a conflict such that the stored buffer unit for that hash value differs from the user supplied buffer unit?

The outcomes of the queries discussed above determine what new information is to be stored on the NCM and under what circumstances, as well as what is written to the mediator. In the simplest case, the protocols of the present invention determine that there is not a duplication of hash values. The absence of duplication of hash values indicates that the user supplied buffer unit is not within the hash value table. Consequently, the buffer unit is written in a new block of the NCM, and an update is made to the hash value table so that should the user later submit the same buffer unit as part of a different data stream or data packet or later within the same data stream, the methodologies will be able to detect that it is the same as the data that is already stored on the NCM. The hash value table is also updated to include the true LBA at which the buffer unit is written. Upon writing a generated hash value and a user supplied buffer unit to the hash value table, they become a stored hash value and a stored buffer unit, respectively.

If the methodologies determine that there is a duplication of hash values, then the second query is made. As noted above, in this second query, the method considers whether application of the algorithm to the user supplied buffer unit leads to production of the same hash value with which an already stored buffer unit is associated, even though the two buffer units are different.

As persons of ordinary skill in the art will readily recognize, this two tier approach introduces efficiency into methods for reducing the number of times that duplicative data is stored on a NCM. In the first step, hash values are compared. These values are smaller than the buffer units, *e.g.,* at least 2x, at least 10x, at least 100x or at least 1000x smaller than the buffer units, and thus, are easier to compare than the buffer unit themselves. Only if those values indicate a duplication of hash values, does the system compare the actual buffer units. Thus, by weeding out the buffer units that are associated with hash values that are not already in the hash value table prior to checking the buffer units against each other, the system is efficient.

In the second tier of the queries, one compares two buffer units to each other. If there is no conflict, *i.e.,* there is a true identity of buffer units (stored and current user supplied); then no additional step of writing to the NCM is needed. Instead, there need only be a notation made to a mediator of the block at which the buffer unit was previously stored. Thus, there is increased efficiency because these buffer units will not need to be written again. In order to keep track of the file to which it belongs, within the mediator, the LBA is associated with the user perceived LBA and optionally, the user generated file name or file system.

The other outcome of the second tier of queries occurs when a stored hash value (as associated with a stored buffer unit) is the same as a generated hash value but there is a conflict because the stored buffer unit and user supplied buffer unit are different. In these cases, the methods of the present invention deem the user supplied buffer unit as needing to be written to the NCM. They also cause the hash value table to be changed so that it associates the common hash value with the user supplied buffer unit. The previous association of the common hash value is rendered inactive or deleted. Consequently, in subsequent queries that search for duplicative buffer units, only the more recently stored hash value, buffer unit association is considered. In these methods, no extension of hash values is ever needed in the case of conflicts.

In various embodiments, for each LBAₓ, the method causes the mediator to store an LBA_{y} with the LBAₓ, wherein LBA_{y} refers to the actual location of the buffer unit that is identical to the user supplied buffer unit. Because the LBAₓ is where the user believes that a buffer unit is stored and the LBA_{y} is where the buffer unit is actually stored, the LBA_{y} is also stored within the hash value table. However, the LBAₓ may be omitted from the hash value table and in some embodiments, only exist on the mediator. Optionally, the mediator also stores the user created file name and/or file identifier and associates that file name with one or more user perceived logical block addresses.

As noted above, most buffer units are stored on an NCM only once. Thus, for a plurality of user files, there are correlations of user perceived logical block addresses and true logical block addresses, and within a plurality of the correlations (on the mediator) that correspond to different user files, there are one or more of the same true logical block addresses but different user perceived logical block addresses. The most highly repetitive buffer units in actual user files will appear in the greatest number of different correlations. Additionally, because a user may supply a buffer and believe that it is being stored at consecutive sites on an NCM, it may record association of a single LBAx with that buffer and view the data as being stored at consecutive LBAs beginning at LBAx. However, because storage is actually on the buffer unit level and frequently for a given buffer won't be stored at consecutive locations, the mediator may store a single user perceived LBA (or implicitly or explicitly) a plurality of consecutive LBAs with a plurality of true LBAs that are not-consecutive. For example, the user may supply a buffer of size 4096B and a user perceived LBA of 10. If the buffer units are 512B in size, the user may implicitly believe that its data is at eight consecutive storage sites beginning at LBA 10. However, in reality, they may be at LBA4, LBA3, LBA2, LBA2, LBA3, LBA3, LBA 9, LBA4, and the mediator would point to those locations. Notably, for most if not all duplicative buffer units that correspond to data within a buffer that a user sends, the mediator would point to the same LBA on the NCM. Thus, on the mediator, there may in some embodiments be correlation of all true locations of data (*e.g.,* all true LBAs) with the user perceived location or locations as received from the user.

Thus in these methods, rather than using extensions to take into account the possibility of the hash value algorithm generating the same hash value, the above described use of the most recent occurrence of the association writes a particular supplied buffer unit to a NCM only when: (i) the comparable hash values are not already within the hash value table as associated with any buffer unit; or (ii) for any given hash value, there is a conflict. In these latter cases, there may be some writing of the same data to the NCM that has previously been written. However, as a matter of practicality, this will only rarely occur.

In some embodiments, writing to the NCM of buffer units is contiguous, *i.e.,* each user supplied buffer unit that is to be written, may be written in the next contiguous block on the NCM. Therefore, there is minimal or no scattering of data on the NCM, which improves read/write performance and permits a savings of storage space. Additionally, read/write performance is improved because less is actually written to the NCM. This in turn enables an operating system's cache to function better. Furthermore, there can be increased security of the data because the data on the NCM cannot be used to reconstitute a file in the absence of the mediator and the hash value table.

Further benefits of the present invention may be appreciated if one considers how data is read. A user may send a request to read a file. The request includes a file identifier and information pertaining to one or more user perceived logical block addresses. By accessing the relevant mediator, one can determine the actual logical block address(es) and retrieve the relevant data. Notably, in contrast to writing protocols, no hash value algorithm or table is needed during the retrieval and reading steps. Instead, the reader retrieves data from the sites on the NCM to which the mediator points, and the mediator may point to one or more buffer units a plurality of times for one or more files.

The present invention also provides systems for the efficient storage of data. These systems may comprise: (a) persistent memory; (b) a central processing unit ("CPU"); (c) a non-cache recording medium; and (d) a mediator. Each of the components may be operably coupled to one or more other components in order to carry out their designated functions.

The persistent memory comprises the hash value table and may be part of or distinct from the non-cache recording medium described below. The hash value table associates each of a plurality of stored hash values with a different stored buffer unit. The hash value is determined by the application of a hash value algorithm to a buffer unit. Each stored buffer unit is also associated with a true logical block address. Persons of ordinary skill in the art will recognize that the hash value table may contain associations among the three types of data: stored hash value, a stored buffer unit and true logical block address, in one table. Alternatively, the hash value table may, in one table, contain an association of only the first two types of data and in another table, in the same or a different memory device (*e.g.,* the mediator) there may be stored a table that correlates the true LBA and the stored buffer unit. The persistent memory may be stored within the CPU or operably coupled to the CPU.

The central processing unit is comprised of hardware or a combination of hardware and software. The CPU is configured to access the persistent memory and to search the hash value table. The CPU is also configured to execute one or more of the methods of the present invention, including but not limited to writing to the NCM and mediator. Furthermore, the CPU is configured to communicate with one or more remote users through a wireless or wired network, *e.g*., through a server.

The NCM is configured for block level storage. The NCM may be separate from or part of the CPU.

In some embodiments of the above described systems, each of the mediators, the hash value table, CPU and the non-cache recording medium are stored remotely from one another. They may be in separate structures that are within the same housing or in different housings.

As noted above, the system of the present invention (which may be controlled through a server) can, after consulting the mediator and without accessing the hash value table, recreate the file and transmit the data to a user. Thus, in one embodiment, a system of the present invention comprises a retrieval module, wherein the retrieval module is configured to reconstitute a data file by accessing the mediator and recombining a plurality of buffer units in an order dictated by the mediator without accessing a hash value table and wherein the order dictated by the mediator is different from the order of the buffer units on the non-cache recording medium.

The various methods of the present invention may be controlled automatically by a manager. The manager may comprise one or more modules and reside on a local computer, on a network or in a cloud or for example, in the CPU. The manager may be configured to coordinate receipt of or to receive information itself and to transfer this information to a mediator, or to control receipt of the information directly by the mediator. Thus, the methods can be designed such that information from the initiator flows through the manager for the de-duplication methods of the present invention and to a mediator or to other components of the system at the direction of the manager, but it does not flow through the manager.

In some embodiments, a manager may control, communicate with and coordinate the activities of one or a plurality of mediators. For each mediator, the manager receives (or coordinates receipt of) a set of parameters. These parameters may comprise, consist essentially of or consist of one, two or all three of file system information, bootability information and partitioning information.

The mediator, may for example, comprise: (a) a first set of tracks; (b) a second set of tracks; (c) a third set of tracks; and (d) a fourth set of tracks. The manager causes file system information, bootability information and partitioning information to be stored in a first set of tracks on the mediator, which may be referred to as reserve 1 or R₁. This information may include an identification of file system information, which will dictate how the reserve blocks are to be used. For example, when using NTFS, sectors 1-2 may be for a MBR (master boot record) and sector 3 may be for $MFT. Optionally, these tracks may be copied into a second set of tracks, which may be referred to as reserve 2 or R₂.

In these embodiments, the manager may also receive metadata in addition to the parameters described in the preceding paragraph. The metadata may be stored in a third set of tracks on the mediator. At the time that the manager receives the parameters and metadata, or at a later time, it may also receive one or more files for storage on a non-cache medium. Each file is received with a file name and one or more user perceived LBAs. The file name is generated by a host that transmits the file and may be defined by the host's file system. The manager, which may for example, be or be a part of a SAN or NAS or combination thereof, upon receipt of the file with a file name, can automatically execute the steps described herein for storage, including stores the true and user perceived LBAs in a bit field of the fourth set of tracks.

In some embodiments, upon receipt of the raw data, the methods of the present invention may cause a confirmation of receipt to be automatically returned to the host. In one QoS (quality of service) protocol, a data file is received through an I/O and immediately sent to L1 cache. Upon receipt, an acknowledgement is sent from L1 cache back through the I/O. From L1 cache, the data file may be sent to L2 cache, which transmits an acknowledgement back to L1 cache. The L2 cache may also send the data file to a system or a part of a system that executes one or more of the embodiments of the present invention, after going through the de-duplication protocols of the present invention, and writes to a mediator and in some cases writes to a non-cache medium (NCM) for long term storage. The NCM may in turn send an acknowledgement back to L2 cache.

In some embodiments, the mediator may reside in or be operably coupled to a heap (dynamically allocated memory) within L1 cache. Alternatively, the mediator may reside within a card, or be part of or be operably coupled to L2 cache or be on a solid state drive or any block device for storage.

As persons of ordinary skill in the art know, the decision to place the mediator in L1 versus L2 will be impacted by factors such as the frequency of use of the stored data. Thus, L1 cache is used to store data that is used frequently by the system or an end user, while L2 caches may be used for data that is accessed somewhat frequently.

In another QoS protocol, through the I/O, a data file is received by L1 cache. The data file is transferred to both L2 cache and the NCM from L1 cache. Each of L2 cache and the NCM send acknowledgments to L1 cache. Either before or after receiving acknowledgments from one or both of L2 cache and the NCM, L1 cache sends an acknowledgement through the I/O.

As noted above, the mediator may comprise a first reserve set of tracks (R₁) and a second reserve set of tracks (R₂). In some embodiments, the second reserve set of tracks (R₂) is a copy of the first reserve set of tracks (R₁). Additionally, in some embodiments, one may use the second reserve set of tracks (R₂) to check for errors in the first reserve set of tracks (R₁).

R₁ may be configured to function as the central point for host initiation. Thus, prior to any of the de-duplication methods of the present invention, the host may select the parameters to send to R₁. The mediator may receive this information directly from the host or indirectly through the manager. Preferably, R₂ is never exposed to the host. Thus, only the mediator itself or the manager can cause information to be stored in R₂. Each of R₁ and R₂ may, for example, contain sixteen sectors and be filled with real data such as host modifiers. By convention, numbering may start at 0. Thus, R₁ may, for example, contain sectors (or tracks) 0 -15 and R₂ may contain sectors (or tracks) 16 -31. However, the mediator may be constructed so as to allow for expansion of each of R₁ and R₂ beyond the initial size of 16 tracks.

In some embodiments, R₁ contains unique reserve sector information and partition information. Within the partition information, one may store the file system information.

By way of a non-limiting example and as persons of ordinary skill in the art are aware, when formatting a volume with an NFTS file system, one creates metadata files such as $MFT (Master File Table), $Bitmap, $Log File and others. This metadata contains information about all of the files and folders on an NFTS volume. The first information on an NTFS volume may be a Partition Boot Sector ($Boot metadata file), and be located at sector 0. This file may describe the basic NTFS volume information and a location of the main metadata file $MFT.

The formatting program allocates the first 16 sectors for the $Boot metadata file. The first sector is a boot sector with a bootstrap code, and the following 15 sectors are the boot sector's IPL (initial program loader).

In addition to the tracks of R₁ and R₂, the mediator may store additional metadata. This metadata may, for example, correspond to information that allows the execution of thin provisioning strategies, which correspond to visualization technology that allows a device to give the appearance of having more physical resources than are actually available, and it may, for example, be contained in the eight tracks after R₂, which would be tracks 32-39. The metadata may also provide for features such as LUN QoS, VM and WORM.

Finally, the mediator may also comprise a bit field. The bit field contains the information that indicates where the data is physically stored within a storage medium and if the metadata is located in tracks 32-39, the sector number of the bit field begins at track 40. It is within the bit field of the mediator that correlation between the file name of the host and the location of the data is stored. Thus, it may comprise, consist essentially of or consist of a sector map.

As a matter of practice, preferably the mediator is not located on the disk or recording medium on which the buffer unit data is stored. Additionally, preferably the mediator requires only about 0.1-0.2% of the total memory of the corresponding disk or recording medium.

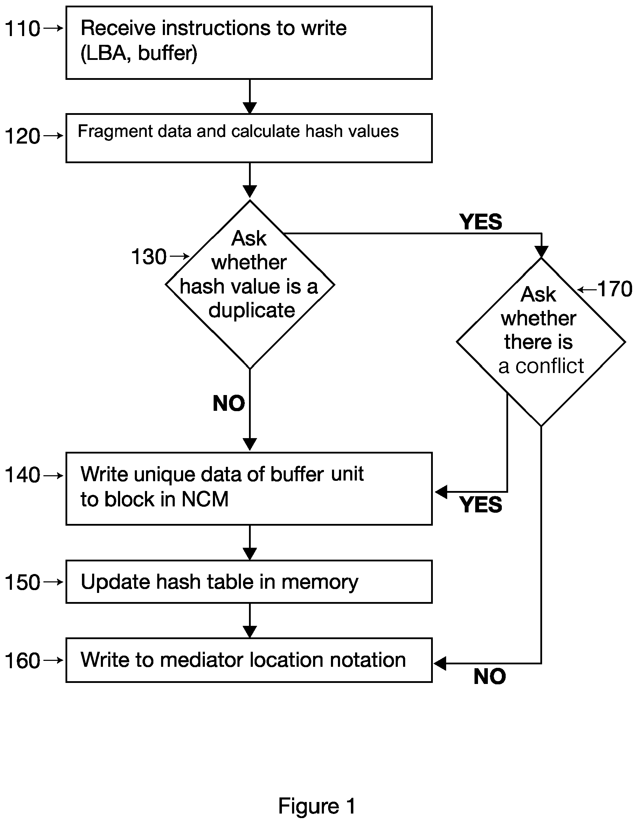

For purposes of further illustration, reference may be made to the figures. **Figure 1** is a representation of a method of the present invention, the instructions for which may be stored in persistent storage in a non-transitory recording medium. For illustrative purposes, the method shown in **figure 1** from step **130** to the end is shown for a single user supplied buffer unit; however, the method may be repeated a plurality of times for a given buffer that is fragmented into a plurality of user supplied buffer units. When the associations of the user perceived LBA and the true LBA are written to the mediator, they associations are grouped together and denoted as corresponding to a particular file. As persons of ordinary skill in the art will recognize, if a user supplied buffer is the same size as a user supplied buffer unit, it need not be fragmented and the various embodiments of the present invention can be configured to check for this condition. Various embodiments of the present invention may also be configured to confirm that all buffers are capable of being divided into buffer units of equal size and if not, then adding 0's to the end of the string of bits of the buffer or what would be the last buffer unit to render them all of the same size.

As the figure shows, instructions may be received to write information to a storage medium. These instructions may be in the form of a user perceived logical block address (LBA) or (LBAₓ) and a user supplied buffer unit **110.**

As described above, the user perceived LBA is the location at which the user believes that his or her data will be stored. The data within the user supplied buffer unit is typically going to be of the size of the blocks on the device on which it will be stored. If the user submits data that is larger than the block size on the device, the data that the user submits may be pre-processed so that it contains a plurality of buffer units, each of the size of the block. If the buffer unit is smaller than the block size, then the computer program product may add all zeroes to one end of the buffer unit until it is the size of a block.

The received instructions are thus in a form or converted to a form that may be represented by (LBA, buffer). For the user supplied buffer unit, the computer program product fragments the data as received, if necessary, and calculates a hash value **120.** When a plurality of instructions is received, a hash value is calculated for each buffer unit.

After the algorithm generates a hash value, it queries whether the hash value is duplicative of a stored hash value that already exists within a hash value table **130.** If the table does not contain the generated hash value, the algorithm concludes that the buffer unit is new to the NCM and writes the buffer unit to a block within the NCM that has not previously been used **140.** The algorithm also causes the hash value table that is stored in memory to be updated to include an association of this user generated buffer unit that has been newly written to the NCM with its generated hash value **150.** This generated hash value becomes a stored hash value, and the user supplied buffer unit becomes a stored buffer unit. In some embodiments, the hash value table also identifies the true logical block address at which the buffer unit is stored on the NCM, whereas in other embodiments, the hash value table excludes this information, and it is stored elsewhere, *e.g.,* on the mediator or in another data file.

After the hash value table has been updated, the user perceived LBA and the true LBA at which the user supplied buffer unit is stored are stored on a mediator and correlated with each other **160.**

Returning back to step **130,** within **figure 1****,** if the query results in a conclusion that the newly calculated hash value is duplicative of a stored hash value within the hash value table, then the methods initiate a protocol that asks whether there is a conflict **170.**

If there is no conflict, then the protocol causes the mediator to store a correlation of the location of the buffer unit data that is already on the NCM and the same as the user supplied buffer unit **160** with the user perceived location. Thus, for this duplicative data, no new information will be written to the NCM.

Returning to the query as to whether there is a conflict **170,** when the response is yes, meaning that the same hash value is assigned to different buffer units, the protocol calls for writing of the user supplied buffer unit to the NCM **140** and updating of the hash value table in memory to a hash value actively associated with the newly written buffer unit. Additionally, the mediator will be updated to contain the new correlations of the user perceived location(s) and true location(s).

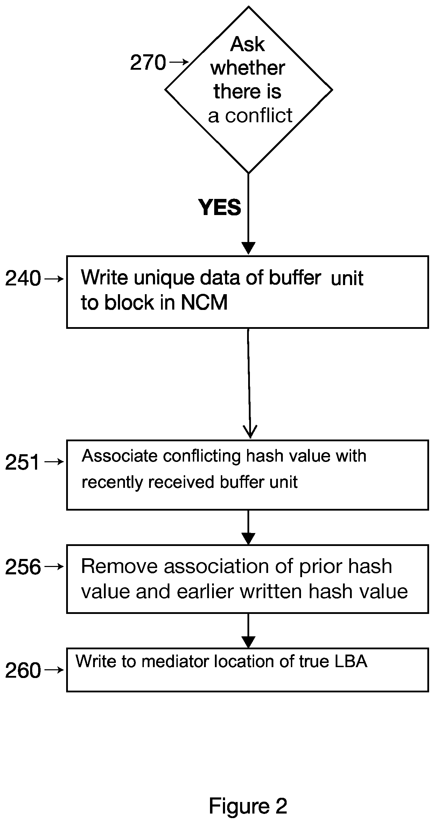

**Figure 2** further illustrates this step. Similar to **figure 1** upon entry into a conflict determination protocol **270,** if there is a yes output, then the unique data of the buffer unit is written to a new block on the NCM **240.** Following writing to the new block, the algorithm updates the hash value table.

When updating the hash value table, the method disassociates the previously stored hash value with a buffer unit, associates the stored hash value with the more recently received buffer unit **251,** and removes or inactivates the association of the hash value with the previously stored buffer unit **256.** After the hash value table has been updated, the protocol writes the true logical block address of the most recently received buffer unit to the mediator and associates it with the user perceived logical block address **260.**

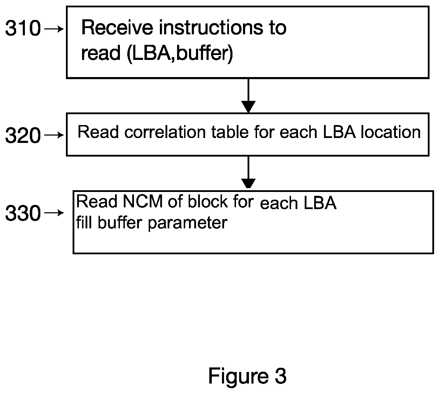

**Figure 3** represents a reading instruction. The system may receive instructions to read a block, *i.e.,* retrieve information of: (LBA, buffer) **310.** The request may come in the form of a request for a file, by a file name, which is the user's system association with one or more user perceived LBAs.

A protocol causes accessing of a correlation table within a mediator and reading at each LBA location that corresponds to the buffer or portion of it **320.** Because the correlation table correlates user perceived LBAs with true LBAs, after the information for an LBA (or LBAs) is obtained, the protocol reads the NCM at the specified actual LBA or LBAs, retrieves the block information and fills the buffer parameter **330.** With this information, the system will have the raw data in the correct order and be able to send it to the host for reconstitution of the requested file through the host's operating system.

Notably, during the reading steps, there is no need to access a hash value algorithm or table. Instead, the LBAs as stored on the NCM may be read to retrieve the buffer units for which a user call. If any one or more buffer units are still within either L1 or L2 cache at the time of reading, then they may be read from the appropriate cache rather than from the NCM.

By way of further example, one can consider the following table:

**Table 1**

| User Perceived LBA | User Supplied Buffer Unit | Hash Value | True LBA Location |
|---|---|---|---|
| 1 | A | x | 100 |
| 2 | B | y | 110 |
| 3 | C | z | 111 |
| 4 | D | a | 112 |
| 5 | E | b | 113 |
| 6 | F | c | 114 |
| 7 | G | x | 115 |
| 8 | H | d | 116 |
| 9 | I | e | 117 |
| 10 | J | y | 110 |
| 11 | K | f | 118 |
| 12 | L | x | 115 |
| 13 | M | g | 119 |
| 14 | N | h | 120 |
| 15 | O | b | 113 |
| 16 | P | z | 111 |
| 17 | Q | y | 121 |
| 18 | R | x | 122 |

| | | | |
|---|---|---|---|
| Assume: A≠G G=L B≠Q B=J E=O C=P A=R | | | |

As the user submits data for storage, the user perceives the LBAs to be 1-18 for 18 blocks each which is the size of a buffer unit, *e.g.,* 512 Bytes. When transmitting the data for storage, the user treats each buffer unit as unique, assuming that it is being stored at a different block.

Upon application of the hash value algorithm, a few duplicative hash values are generated. As can be seen, hash value x applies to buffer units A, G, L and R; hash value y applies to buffer units B, J and Q; hash value z applies buffer units C and P; and hash value b applies to buffer units E and O. However, the true duplications of data are located between A and R, G and L, B and J, E and O and C and P. Thus, conflicts arise between A and G; G and R; B and Q; and Q and J.

As the fourth column shows, when writing the data, for true duplicates, no new blocks are written. See *e.g.,* the actual locations of where the user perceived LBA 2 and 10 are stored. Both are stored at block 110. If one considers the third and fourth columns, one sees that after the first seven user supplied buffer units have been analyzed, there is the first duplication hash value generated (the x value). However, because A≠G, G must be written to a block on the NCM. After this occurs, for purposes of further conflict analysis, within the hash value table that is stored in memory, x is associated with G and not A.

After the tenth buffer unit J has been analyzed, one sees that a duplicative hash value has been generated y. However, because the buffer units are the same, there is no conflict. Therefore, no update is needed to the hash value table, and no new block needs to be written to the NCM. Instead, the mediator will be updated to point to the true LBA 110, and to correlate it with the user perceived LBA. A similar true duplication is revealed after the twelfth user perceived LBA is analyzed, and the fifteenth and sixteenth are analyzed.

After buffer unit Q is analyzed, hash value y is generated. However, because Q≠B, there is a conflict. Consequently, a new block is written at LBA 121, and the hash value table is updated to associate y with Q and no longer associates y with B (which is the same as J).

After the user supplied buffer unit R is analyzed, a hash value x is generated. R=A. However, A is not the most recent association with x within the hash value table. Consequently, the protocol treats R as if it were the first time that it saw R and must both: (1) save a new correlation in the hash value table or write over an old one, (but it will not reinstate an association stored in memory); and (2) store the data of a new block in the NCM (here block 122). Thus, the NCM, in the example, will contain some duplication.

Table 1 is for illustrative purposes and in some embodiments, only the first and fourth columns are part of the mediator and they are not part of the hash value table. The size requirement of the mediator is small. For example, in some embodiments, a mediator needs on 8 or 16 Bytes for each buffer unit that is stored on the NCM of size of 512 Bytes or 4K.

Through the various embodiments of the present invention, physical storage space of NCMs can be greatly reduced. For example, they can be reduced by at least 50%, at least 100%, at least 200%, at least 500% or at least 1000%. Thus, in some embodiments, the amount of storage space that is needed is 50 -150 times less than would be need under standard conditions. For example, only 5-10 Bytes would be needed for storage on a mediator of what corresponds to a buffer unit of *e.g.,* 512 Bytes to 4K. Thus, by reducing the need to store the same buffer units (or fragmented buffer units) multiple times, an 8GB USB stick, which is an example of an NCM of the present invention, can be used to store what corresponds to 1.53TB of data.

The methods, systems and computer program products of the present invention have been described assuming that the buffer units that are stored are the same, even if fragmented, as those that are received from a user. In these embodiments, because they are stored at different LBAs than the user perceives, and in an order that the user cannot perceive the mediator is necessary for retrieving the information, and the user cannot retrieve data without it. Thus, it provides a degree of security.

Different users who make use of the same hash value algorithm will generate the same hash values. Therefore, their hash value tables will be similar, except for the locations of the buffer unit on the NCM. Additionally, the correlation information in the mediator will be different. As an additional level of security, prior to entering the methods of the present invention, a user may desire to code or to convert the data. These actions may be referred to as preprocessing.

In some embodiments, prior to entering the protocols or systems described above, a user's data is first converted through the use of a bit marker table or frequency converter or other hash value algorithm to generate data that is smaller in size and/or encoded. Methods, systems, and computer program products for carrying out these technologies are disclosed in U.S. 13/756,921, filed February 2, 2013, entitled, Bit Markers and Frequency Converters; U.S. 13/797,003, filed March 12, 2013, entitled Data Storage and Retrieval Mediation Systems and Methods for Using Same; and U.S. 13/908,239, filed June 3, 2013, entitled Methods and Systems for Storing and Retrieving Data. The output of these methods may be used to generate the buffer units for reducing duplications.

These applications describe methodologies that may be incorporated into the present invention as preprocessing steps, *i.e.,* prior to the de-duplication strategies of the present embodiments. In these cases, the buffer units would correspond to the output of the preprocessing methods by which data is converted through the use of a bit marker table or frequency converter.

Thus, in one embodiment, this preprocessing step comprises: (i) receiving a plurality of digital binary signals, wherein the digital binary signals are organized in a plurality of chunklets, wherein each chunklet is N bits long, wherein N is an integer number greater than 1 and wherein the chunklets have an order; (ii) dividing each chunklet into subunits of a uniform size and assigning a marker to each subunit from a set of X markers to form a set of a plurality of markers, wherein X is less than or equal to the number of different combinations of bits within a subunit, identical subunits are assigned the same marker and at least one marker is smaller than the size of a subunit; and (iii) using the markers as buffer units. This preprocessing step makes use of a bit marker table that may be stored in the same or in different persistent memory than the hash value table. When reading data, these preprocessing steps may be carried out in the reverse order, and after data is retrieved from the NCM and the buffer units on the NCM are recombined in the manner dictated by the mediator. When using the marker as the buffer unit, one may combine or divide markers in order to form buffer units of the necessary size.

A bit marker table may contain makers that are all the same size or of different sizes. When of different sizes, the sizes may, as described below, be determined by the predicted frequency of string of bits or bytes.

By way of further example, when the preprocessing steps makes use of a bit marker table, raw data is translated into a series of markers that represent the raw data. The raw data corresponds to the data received from the host, and thus, may for example, be one or more chunklets that individually or collectively form one or more files such as a JPEG, PDF, TIFF or WORD document.

The chunklets are received in an order. For example, a file may contain ten chunklets that are received by the system serially. Alternatively, a plurality of chunklets for a given file could be transmitted in parallel or together if they were to contain information that allows for their being re-associated with one another in a manner that allows for recreation and use of the file by the host's operating system. Thus, in some embodiments, the methods of the present invention generate markers in the same order in which the chunklets are received. Accordingly, when a host calls for retrieval of a file, the corresponding retrieval methodologies would call the encoded data back in the same order, and decode it into chunklets in the appropriate order.

Optionally, prior to encoding, the system may divide the chunklets into groups of bits, also referred to as subunits, each of which is A bits long. If the system divides the chunklets into subunits, the subunits may be compared to a bit marker table. If the system does not divide the chunklets into subunits, then each chunklet may be compared to a bit marker table.

The bit marker table correlates unique sets of bits with unique markers. In some embodiments, the bit marker table contains a marker for each unique string of bits of size A when subunits are used or of size N when subunits are note used. Thus, under this method a computer program may receive a set of chunklets as input. It may then divide each chunklet into Y subunits that are the same size and that are each A bits long, wherein A/8 is an integer. For each unique A, there may be a marker within the table.

Thus, through an automated protocol, after receipt of the chunklets, a computer program product causes the bit marker table to be accessed. Accordingly, each chunklet or subunit may serve as an input, and each bit marker may serve as an output, thereby forming an output set of markers. The output set of markers may be referred to as translated, coded or encoded data. In embodiments in which each chunklet is not subdivided, then each chunklet would receive one marker. If the chunklet is divided into two subunits, it would be translated or encoded into two markers. Thus, a computer program product uses a bit marker table that correlates markers with input in order to assign at least one marker that corresponds to each chunklet. The computer program product may be designed such that a different output is generated that corresponds to each individual marker, a different output is generated that contains a set of markers that corresponds to each chunklet or a different output is generated that contains the set of markers that corresponds to a complete file.

As noted above, the bit marker table contains X markers. In some embodiments, X equals either the number of different combinations of bits within a chunklet of length N, if the method does not divide the chunklets into subunits, or the number of different combinations of bits within a subunit of length A, if the method divides the chunklets. If documents types are known or expected to have fewer than all of the combinations of bits for a given length subunit or chunklet, X (the number of markers) can be smaller than the actual number of possible combinations of bits. For example, in some embodiments, all of the bit markers are the same size, and the number of bit markers within the bit marker table is equal to the number of combinations of bits within a string of bits of size N or A. In other embodiments, all of the bit markers are the same size, and the number of bit markers within the bit marker table is less than 90%, less than 80%, less than 70% or less than 60% of the number of combinations of bits within a string of bits of size N or A.

By way of example, in some embodiments, each chunklet is assigned a code (*i.e.,* a marker) that consists of a plurality of 0s and/or Is. In other embodiments, each chunklet is divided into a plurality of subunits that are each assigned a code (*i.e.,* a marker) that consists of a plurality of 0s and Is. The subunits may be defined by a length A, wherein N/A =Y and Y is an integer. If any subunit does not have that number of bits, *e.g.,* one or more subunits have a smaller number of bits than the system is configured to receive as input, the system may add bits, *e.g.,* zeroes, until all subunits are the same size. This step may, for example, be performed after the chunklets are divided into subunits and in the absence of first checking to see if all of the chunklets are the same size. Alternatively, and as described above, it may be performed on the chunklet level prior to dividing the chunklets into subunits.

As the above-description suggests, the algorithm may be configured to translate strings of bits into a set of coded data, and the algorithm may be designed such that the strings of bits correspond either to the chunklets or to the subunits of the chunklets. Preferably, the set of coded data is smaller than the file as received from the host or client. However, regardless of whether the set of coded data is smaller than the original data, it is capable of being converted back into the chunklets of the file. As persons of ordinary skill in the art will recognize, the data that is received from the host for storage will be raw data, and thus can correspond to any document type. The output of markers may be in an order that allows them to be combined to form user supplied buffer units for input into a hash value algorithm as described above.

The encoding can serve two independent purposes. First, by encoding the data for storage, there is increased security. Only a person or entity that knows the code (*i.e.,* has access to the bit marker table) will be able to decode it and to reconstruct the document. Second, if the code is created using fewer bits than the original document, then less storage space will be needed and there can be a cost savings.

For at least a plurality of the unique combination of bits within the table, preferably if the system does not divide the chunklets into subunits the marker is smaller than chunklet length N or if the system does divide the chunklets into subunits, smaller than subunit length A. Preferably if the system does not divide the chunklets into subunits, no markers are larger than chunklet length N, or if the system does divide the chunklets into subunits, no markers are larger than subunit length A. In some embodiments, all markers are smaller than N or smaller than A. Additionally, in some embodiments, each marker may be the same size or two or more markers may be different sizes.

As described above, a bit marker table may assign markers to strings of bits in a random or non-random manner to raw data, and the bit markers may be of a uniform or non-uniform size. However, instead of a bit marker table as described above, one may use a frequency converter. Thus, one could assign smaller markers to raw data that is expected to appear more frequently in a document type or set of documents. This strategy takes advantage of the fact that approximately 80% of all information is contained within approximately the top 20% of the most frequent subunits. In other words, the subunits that correspond to data are highly repetitive.

In some embodiments, for every plurality of converted strings of bits that are of different sizes there is a first converted string of bits that is A bits long and a second converted string of bits that is B bits long, wherein A < B, and the identity of the A bits of the first converted string of bits is not the same as the identity of the first A bits of the second converted string of bits. When using markers, either from the bit marker table or frequency converter, when they are of a different size, they must be formatted that the system can know where one marker ends and the next begins. This may, for example, be accomplished through setting a minimal marker size and a read analysis that queries whether each string of the minimal size is unique within the table or converter and if not, continuing to grow the string by reading additional bit(s) and repeating the query for each additional bit.

Information may be converted and the output code can be configured to be smaller than the input because markers are used to represent groups of bits. Thus, preferably within a table, at least one, a plurality, at least 50%, at least 60%, at least 70%, at least 80%, at least 90%, or at least 95% of the markers are smaller in size than the subunits. However, there is no technological impediment to having the converted data being the same size or larger than the data received from the host or as generated from a hash function value algorithm.

According to another embodiment, the preprocessing step comprises: (i) receiving an I/O stream of N Bytes (using for example an I/O protocol); (ii) fragmenting the N Bytes into fragmented units of X Bytes; (iii) applying a cryptographic hash function (value algorithm) to each fragmented unit of X Bytes to form a generated hash function value for each fragmented unit of X Bytes; (iv) accessing a correlation file, wherein the correlation file associates a stored hash function value of Y bits with each of a plurality of stored sequences of X Bytes and (a) if the generated hash function value for a fragmented unit of X Bytes is in the correlation file, using the stored hash function value of Y bits as the user supplied buffer unit; and (b) if the generated hash function value for the fragmented unit of X Bytes is not in the correlation file, then storing the generated hash function value of Y bits with the fragmented unit of X Bytes in the correlation file and using the generated hash function value as the user supplied buffer unit.

When using this preprocessing hash value algorithm, one needs to address the possibility of their being conflicts. As, an alternative to the methods described above for de-duplication in which the most recent hash value association is maintained and stored, during this optional preprocessing step, one may use a conflict resolution module that, in the case of generation of a hash function value that is the same as a stored hash function value in the correlation file but for which the user supplied chunklet is different from the stored chunklet, a method causes there to be different Z bits associated with the stored hash function value and the generated hash function value. This technique is described in U.S. patent application serial number 13/908,239, filed June 3, 2013.

Thus, this preprocessing step may make use of a first hash value table, and for all hash function values for which no conflict exists, Z bits are associated and the Z bits are a uniform length of *e.g.,* 8 to 16 zeroes. By way of a non-limiting example, the method may associate 8 zeroes at the end of a checksum of 8 Bytes when the checksum does not conflict with a previously stored checksum. Upon identification of a conflict, (*e.g.,* different fragmented units being associated with the same checksum,) the newest checksum may be assigned a different Z value. Thus, if the Z value as stored in the correlation file is 00000000, the Z value for the first conflicting checksum may be 00000001 and should there be another conflicting checksum 00000010. If there were additional conflicting checksums, each conflicting checksum may be assigned the next Z value as the conflicting checksum is identified. Thus, the conflict module may be accessed as a check after the correlation file is accessed, and only if the newly generated hash value is already within the correlation file. The conflict module would then determine if there is a conflict or if both the checksum and the fragmented units from the received file are already associated with each other in the correlation file. These extension files may be used as an alternative to replacing or overwriting stored hash value associations with stored buffer units. These checksums with extensions may be combined to be the necessary size to form input as the user supplied buffer units.

In any case in which the preprocessing step uses a hash value algorithm, the first hash value algorithm to be applied may be referred to as a first hash value algorithm or a preprocessing hash value algorithm that makes use of a first hash value table, and the second hash value algorithm may be referred to as a de-duplication hash value algorithm or second hash value algorithm that makes use of second hash value table. When both a preprocessing hash value algorithm and a second hash value algorithm are used, as noted above, preferably, in order to address conflicts when using de-duplication hash value algorithm the corresponding hash value table decides between conflicting associations by choosing in favor of the most recent association, whereas in order to address conflicts when using preprocessing hash value algorithm the corresponding hash value table uses the extension method as described above.

When using preprocessing techniques, the outputs, *e.g.,* the bit markers may be of the same size as the buffer units. In some embodiments, the bit markers may be larger than the size of the buffer units. In these cases, the system may fragment them to form the buffer units, or contain a default module that rejects any bit markers that are larger than the data for which they code, and instead use the original raw data to form the buffer units, thereby bypassing the access to the bit marker table. In other embodiments, they may be smaller and need to be combined to form the buffer units or to form a buffer to be fragmented into buffer units. These steps may be carried out on a server, in a cloud or by a CPU according to a module within a computer program product.

If preprocessing of data is part of the writing process, then post-processing of data must be part of the reading process. Unlike in the reading of the de-duplication steps of the present invention, the post-processing steps are symmetrical to the preprocessing steps but carried out in the reverse order.

Additionally, the various embodiments of the present invention may be used in combination with other methods for protecting data against loss. In certain embodiments, one may use two mediators to facilitate backing-up data. For example, in a first mediator one may correlate a data file that is stored in on a first recording medium with a file name. As described above, the first mediator is configured to permit a user or entity that identifies the file name to retrieve the data file from the recording medium.

A data protection protocol may be executed that generates a second mediator. The second mediator will be an exact copy of the first mediator at a time T1. Thus, at T1, both the first mediator and the second mediator will point to the same LBAs on the first recording medium.

After time T1, for example at T2, the host may seek to update a file that it believes is stored in a given location *e.g.,* on a given sector or sector cluster. The host will not change the data stored at the first storage address(es). Rather than causing the information on the NCM to be written over, the first mediator may generate a new correlation entry that corresponds to what the host believes is an updated file. Because most if not all of the buffer units that are written on the NCM are unique entries, the new correlation on the mediator will differ from the original correlation only for the buffer units that are different from those in the original correlation. Thus, at T0 for file(A), a first mediator may correlate the following true LBAs: 200, 201, 202, 203, 204, 205, 206. At T1, a copy of the mediator may be made. At T2, the user may try to update file(A). On the first mediator, a new correlation may be saved that points to the following true LBAs: 200, 201, 310, 203, 204, 205, 206. However, the second mediator would not change. Thus, they would differ by to where they point. The earlier saved correlation may be rendered inactive on the first mediator or deleted or overwritten.

This use of the two mediators will permit one to provide a snapshot of the data as it existed at T1, without causing the host to need to update its file system to indicate that the file as it existed both at T1 and at T2 are being stored. Thus, the snapshot locks all data files that are stored at time T1 and prevents anyone from deleting or writing over those physical files. However, if the host wishes to revise those files, it can work under the impression that it is doing so, when in fact only new portions of the file are stored, and a new mediator entry is made.

As suggested above, this method may be implemented by a system that comprises a first mediator, a second mediator and a non-cache storage medium. Each of the first mediator, the second mediator and the recording medium may be stored on or be formed from separate devices that comprise, consist essentially of or consist of non-transitory media. Additionally, within the system the mediators and the recording media are operably coupled to one another and optionally to one or more computers or CPUs that store instructions to cause them to carry out their intended functions and to communicate through one or more portals over a network to one or more hosts. Still further, although this embodiment is described in connection with the use of two mediators, one could implement the system using two sections of the same mediator rather than two separate mediators.

The aforementioned system for backing-up data is described in the context of two mediators. However, more than two mediators could be used to capture a history of stored files or versions of files. For example, at least three, at least four, at least five, at least ten mediators, *etc.,* may be used. Additionally, hosts may have mediators take snapshots at regular intervals, *e.g*., weekly, monthly, quarterly or yearly, or irregular intervals, *e.g*., on-demand.

According to another method for backing up data, a clone of the non-cache media may be made. In this method, in a first mediator, one correlates a plurality of file names with a plurality of locations of data that are stored on a non-cache storage medium. The first mediator is configured to permit a user who identifies a specific file name to retrieve a data file from the first non-cache storage medium that corresponds to the specific file name. Part or the entire specific file may be stored in a first sector or sector cluster.

One may make a copy of the plurality of data files (or all data files of a first non-cache storage medium) to a second non-cache storage medium and a second mediator. The second mediator is a copy of the first mediator at time T1 and is operably coupled to the second non-cache storage medium. At time T2, which is after T1, the user may direct the system to save revisions to a data file that is stored in said first sector or sector cluster on the first non-cache storage medium. Only new buffer units (or buffer units that are not actively associated with a hash value) would be added to the first non-cache storage medium and there would be no writing over of data on the first non-cache storage medium. Instead a new correlation would be written on the first mediator. No changes would be made to the second mediator or second non-cache storage medium. As a user requests a file after T2, he or she would go through the first mediator and retrieve the most recent stored version of the file. However, the system administrator would have access to an earlier version, which would be stored on the second non-cache medium and could retrieve it by going through the second mediator.

This method may be implemented by a system that comprises a first mediator, a second mediator, a first non-cache storage medium and a second non-cache storage medium. Each of the first mediator, the second mediator and the first and second recording media for storing data files may be stored on separate devices that comprise, consist essentially of or consist of non-transitory media. In some embodiments, the most recent file, which is stored in the first non-cache medium, has the same LUN that the legacy file has within the second non-cache medium.

Any of the features of the various embodiments described in this specification can be used in conjunction with features described in connection with any other embodiments disclosed unless otherwise specified. Thus, features described in connection with the various or specific embodiments are not to be construed as not suitable in connection with other embodiments disclosed herein unless such exclusivity is explicitly stated or implicit from context.

## Claims

1. A method for storing data on a non-cache recording medium, the method comprising:
i. Receiving (110) instructions to write data to a non-cache recording medium, wherein the instructions comprise a user perceived logical block address and a user supplied buffer;
ii. Dividing (120) the user supplied buffer into user supplied buffer units, the user supplied buffer units generated through the use of a bit marker table or frequency converter, wherein the bit marker assigns markers to strings of bits, wherein at least a portion of the assigned markers are smaller in size than the strings of bits to which they are assigned, and wherein the frequency converter assigns smaller markers to raw data that is expected to appear more frequently;
iii. Applying (120) a cryptographic hash function to each user supplied buffer unit, thereby generating a generated hash value for each user supplied buffer unit;
iv. Activating (130) a computer program product that comprises an algorithm that causes the computer program product to access a hash value table and to determine whether each generated hash value is duplicative of a hash value within the hash value table, wherein the hash value table associates each of a plurality of stored hash values with a different stored buffer unit, and a true logical block address; and
A. if the generated hash value is not within the hash value table, then writing (140) the user supplied buffer unit to a block in a non-cache recording medium, updating the hash value table to include a correlation of the user supplied buffer unit, the generated hash value and a true logical block address at which the user supplied buffer unit is stored, and correlating on a mediator the true logical block address that corresponds to where the user supplied buffer has been written and the user perceived logical block address for the user supplied buffer; and
B. if the generated hash value is duplicative of a stored hash value within the hash value table, querying (170) whether there is a conflict, wherein a conflict is defined as the circumstance in which the same hash value is associated with a stored buffer unit and the user supplied buffer unit, and the stored buffer unit and the user supplied buffer unit have different values, and
a. if there is a conflict, writing (140, 240) the user supplied buffer unit to a block in the non-cache recording medium, rendering inactive or deleting an association within the hash value table between the stored buffer unit and the stored hash value, updating the hash value table to include a correlation of the user supplied buffer unit, the generated hash value and a true logical block address at which the user supplied buffer unit is stored, and writing on the mediator the true logical block address that corresponds to where the user supplied buffer unit has been written and the user perceived logical block address, and
b. if there is no conflict, writing (160) on the mediator the true logical block address of a buffer unit stored on the non-cache recording medium that is the same as the user generated buffer unit and correlating it with the user perceived logical block address for the user supplied buffer without writing the user supplied buffer unit on the non-cache medium.

2. The method according to claim 1, further comprising repeating (iii) -(iv) for each of a plurality of user supplied buffer units, wherein collectively said plurality of user supplied buffer units correspond to a file.

3. The method according to claim 1, wherein the user supplied buffer consists of from 512 Bytes to 2MB.

4. The method according to claim 1, wherein for a user perceived logical block address, the mediator correlates the same true logical block address a plurality of times.

5. The method according to claim 1, wherein the buffer unit is 512B or 4K in size.

6. The method according to claim 5, wherein the hash value is 8 Bytes or 16 Bytes in size.

7. The method according to claim 1, wherein the user supplied buffer units are formed by preprocessing, wherein said preprocessing comprises: (i) receiving a plurality of digital binary signals, wherein the digital binary signals are organized in a plurality of chunklets, wherein each chunklet is N bits long, wherein N is an integer number greater than 1 and wherein the chunklets have an order; (ii) assigning a marker to each chunklet from a set of X markers to form a set of a plurality of markers, wherein X is equal to or less than the number of different combinations of bits within a chunklet, identical subunits are assigned the same marker; and (iii) using the markers as buffer units.

8. The method according to claim 1, wherein the user supplied buffer units are formed by preprocessing, wherein said preprocessing comprises: (i) receiving a plurality of digital binary signals, wherein the digital binary signals are organized in a plurality of chunklets, wherein each chunklet is N bits long, wherein N is an integer number greater than 1 and wherein the chunklets have an order; (ii) dividing each chunklet into subunits of a uniform size and assigning a marker to each subunit from a set of X markers to form a set of a plurality of markers, wherein X is equal to or less than the number of different combinations of bits within a subunit, identical subunits are assigned the same marker; and (iii) using the markers as buffer units.

9. A system for storing data, wherein the system comprises:
(a) persistent memory, wherein the persistent memory stores a hash value table that is configured to associate a stored buffer unit with a stored hash value and a true logical block address;
(b) a central processing unit that comprises or is operably coupled to a computer program product that is stored in a non-transitory medium, wherein the computer program product comprises executable code that when executed, automatically,
i. applies a hash value algorithm to each of one or more user supplied buffer units to generate a generated hash value, the user supplied buffer units generated through the use of a bit marker table or frequency converter, wherein the bit marker assigns markers to strings of bits, wherein at least a portion of the assigned markers are smaller in size than the strings of bits to which they are assigned, and wherein the frequency converter assigns smaller markers to raw data that is expected to appear more frequently; and
ii. determines whether the generated hash value is a duplicate of a stored hash value within the hash value table that is associated with a stored buffer unit, and if so, determines whether a conflict exists, wherein the conflict is defined as a hash value being associated with two different buffer units and if a conflict exists, updating the hash value table to cause the hash value within the hash value table to be associated with the user supplied buffer unit and not the stored buffer unit;
(c) a non-cache recording medium, wherein the non-cache recording medium is configured for block level storage; and
(d) a mediator, wherein the mediator stores a correlation of a true logical block address with a user perceived logical block address.

10. The system of claim 9, wherein the computer program writes the user supplied buffer unit to the non-cache recording medium only if:
i. either the generated hash value is not a duplicate of the hash value within the hash value table; or
ii. the generated hash value is a duplicate of a stored hash value, and there is a conflict.

11. The system of claim 9, wherein for a plurality of user files, there are correlations of user perceived logical block addresses and true logical block addresses, and within a plurality of correlations for different files there are one or more of the same true logical block addresses but different user perceived logical block addresses.

12. The system of any of claims 9-11, further comprising a retrieval module, wherein the retrieval module is configured to reconstitute a data file by accessing the mediator and recombining a plurality of buffer units in an order dictated by the mediator without accessing a hash value table and wherein the order dictated by the mediator is different from the order of the buffer units on the non-cache recording medium.

13. A computer readable program, wherein the computer program product comprises executable code that, when executed on a computer, causes the computer to implement any method according to claims 1-8.

## Patentansprüche

1. Verfahren zum Speichern von Daten auf einem Nicht-Cache-Aufzeichnungsmedium, wobei das Verfahren aufweist:
i. ein Empfangen (110) von Anweisungen, Daten in ein Nicht-Cache-Aufzeichnungsmedium zu schreiben, wobei die Anweisungen eine benutzerseitig wahrgenommene logische Blockadresse und einen benutzerseitig bereitgestellten Puffer aufweisen;
ii. ein Teilen (120) des benutzerseitig bereitgestellten Puffers in benutzerseitig bereitgestellte Puffereinheiten, wobei die benutzerseitig bereitgestellten Puffereinheiten durch die Verwendung einer Bitmarkertabelle oder eines Frequenzwandlers generiert werden, wobei der Bitmarker Marker zu Zeichenfolgen von Bits zuweist, wobei mindestens ein Abschnitt der zugewiesenen Marker eine kleinere Größe hat als die Zeichenfolgen von Bits, denen sie zugewiesen sind, und wobei der Frequenzwandler kleinere Marker Rohdaten zuweist, von denen erwartet wird, dass sie häufiger auftreten;
iii. ein Anwenden (120) einer kryptografischen Hashfunktion auf jede benutzerseitig bereitgestellte Puffereinheit, wodurch ein generierter Hashwert für jede benutzerseitig bereitgestellte Puffereinheit generiert wird;
iv. ein Aktivieren (130) eines Computerprogrammprodukts, das einen Algorithmus aufweist, der das Computerprogrammprodukt veranlasst, auf eine Hashwerttabelle zuzugreifen und zu bestimmen, ob jeder generierte Hashwert für einen Hashwert in der Hashwerttabelle doppelt vorliegt, wobei die Hashwerttabelle jeden von einer Mehrzahl von gespeicherten Hashwerten einer anderen gespeicherten Puffereinheit und einer wahren logischen Blockadresse zuordnet; und
A. wenn der generierte Hashwert sich nicht in der Hashwerttabelle befindet, anschließend ein Schreiben (140) der benutzerseitig bereitgestellten Puffereinheit in einen Block in einem Nicht-Cache-Aufzeichnungsmedium, ein Aktualisieren der Hashwerttabelle, um eine Korrelation der benutzerseitig bereitgestellten Puffereinheit, des generierten Hashwerts und einer wahren logischen Blockadresse aufzunehmen, an der die benutzerseitig bereitgestellte Puffereinheit gespeichert ist, und auf einer Mittlereinheit ein Korrelieren der wahren logischen Blockadresse, die der Position, auf die der benutzerseitig bereitgestellte Puffer geschrieben worden ist, und der benutzerseitig wahrgenommenen logischen Blockadresse für den benutzerseitig bereitgestellten Puffer entspricht; und
B. wenn der generierte Hashwert für einen gespeicherten Hashwert in der Hashwerttabelle doppelt vorliegt, ein Abfragen (170), ob ein Konflikt vorhanden ist, wobei ein Konflikt als der Umstand definiert wird, unter dem derselbe Hashwert einer gespeicherten Puffereinheit und der benutzerseitig bereitgestellten Puffereinheit zugeordnet wird, und die gespeicherte Puffereinheit und die benutzerseitig bereitgestellte Puffereinheit verschiedene Werte haben, und
a. wenn ein Konflikt vorhanden ist, ein Schreiben (140, 240) der benutzerseitig bereitgestellten Puffereinheit in einen Block in dem Nicht-Cache-Aufzeichnungsmedium, ein Inaktivieren oder Löschen einer Zuordnung in der Hashwerttabelle zwischen der gespeicherten Puffereinheit und dem gespeicherten Hashwert, ein Aktualisieren der Hashwerttabelle, um eine Korrelation der benutzerseitig bereitgestellten Puffereinheit, des generierten Hashwerts und einer wahren logischen Blockadresse aufzunehmen, an der die benutzerseitig bereitgestellte Puffereinheit gespeichert ist, und auf der Mittlereinheit ein Schreiben der wahren logischen Blockadresse, die der Position, auf die der benutzerseitig bereitgestellte Puffer geschrieben worden ist, und der benutzerseitig wahrgenommenen logischen Blockadresse entspricht; und
b. wenn kein Konflikt vorhanden ist, auf der Mittlereinheit ein Schreiben (160) der wahren logischen Blockadresse einer Puffereinheit, die auf dem Nicht-Cache-Aufzeichnungsmedium gespeichert ist, die dieselbe wie die benutzerseitig bereitgestellte Puffereinheit ist, und ein Korrelieren von dieser mit der benutzerseitig wahrgenommenen logischen Blockadresse für den benutzerseitig bereitgestellten Puffer, ohne die benutzerseitig bereitgestellte Puffereinheit auf das Nicht-Cache-Medium zu schreiben.

2. Verfahren nach Anspruch 1, ferner aufweisend ein Wiederholen von (iii) bis (iv) für jede von einer Mehrzahl von benutzerseitig bereitgestellten Puffereinheiten, wobei die Mehrzahl von benutzerseitig bereitgestellten Puffereinheiten insgesamt einer Datei entspricht.

3. Verfahren nach Anspruch 1, wobei der benutzerseitig bereitgestellte Puffer 512 Byte bis 2 MB umfasst.

4. Verfahren nach Anspruch 1, wobei für eine benutzerseitig wahrgenommene logische Blockadresse die Mittlereinheit dieselbe wahre logische Blockadresse mehrmals korreliert.

5. Verfahren nach Anspruch 1, wobei die Puffereinheit 512 B oder 4K groß ist.

6. Verfahren nach Anspruch 5, wobei der Hashwert 8 Byte oder 16 Byte groß ist.

7. Verfahren nach Anspruch 1, wobei die benutzerseitig bereitgestellten Puffereinheiten durch ein Vorverarbeiten gebildet werden, wobei das Vorverarbeiten aufweist: (i) ein Empfangen einer Mehrzahl von digitalen Binärsignalen, wobei die digitalen Binärsignale in einer Mehrzahl von Chunklets organisiert sind, wobei jedes Chunklet N Bit lang ist, wobei N eine Ganzzahl größer als 1 ist, und wobei die Chunklets eine Reihenfolge haben; (ii) ein Zuweisen eines Markers zu jedem Chunklet aus einem Satz von X Markern, um einen Satz von einer Mehrzahl von Markern zu bilden, wobei X gleich oder kleiner als die Anzahl von verschiedenen Kombinationen von Bits in einem Chunklet ist, wobei identischen Untereinheiten derselbe Marker zugewiesen wird; und (iii) ein Verwenden der Marker als Puffereinheiten.

8. Verfahren nach Anspruch 1, wobei die benutzerseitig bereitgestellten Puffereinheiten durch ein Vorverarbeiten gebildet werden, wobei das Vorverarbeiten aufweist: (i) ein Empfangen einer Mehrzahl von digitalen Binärsignalen, wobei die digitalen Binärsignale in einer Mehrzahl von Chunklets organisiert sind, wobei jedes Chunklet N Bit lang ist, wobei N eine Ganzzahl größer als 1 ist, und wobei die Chunklets eine Reihenfolge haben; (ii) ein Teilen jedes Chunklets in Untereinheiten von einheitlicher Größe und ein Zuweisen eines Markers zu jeder Untereinheit aus einem Satz von X Markern, um einen Satz einer Mehrzahl von Markern zu bilden, wobei X gleich oder kleiner als die Anzahl von verschiedenen Kombinationen von Bits in einer Untereinheit ist, wobei identischen Untereinheiten derselbe Marker zugewiesen wird; und (iii) ein Verwenden der Marker als Puffereinheiten.

9. System zum Speichern von Daten, wobei das System aufweist:
(a) einen Dauerspeicher, wobei der Dauerspeicher eine Hashwerttabelle speichert, die konfiguriert ist, um eine gespeicherte Puffereinheit einem gespeicherten Hashwert und einer wahren logischen Blockadresse zuzuordnen;
(b) eine Zentraleinheit, die ein Computerprogrammprodukt, das in einem nicht flüchtigen Medium gespeichert ist, aufweist oder damit betriebsfähig verbunden ist, wobei das Computerprogrammprodukt ausführbaren Code aufweist, der bei Ausführung automatisch
i. einen Hashwertalgorithmus auf jede von einer oder mehreren benutzerseitig bereitgestellten Puffereinheiten anwendet, um einen generierten Hashwert zu generieren, wobei die benutzerseitig bereitgestellten Puffereinheiten durch die Verwendung einer Bitmarkertabelle oder eines Frequenzwandlers generiert werden, wobei der Bitmarker Marker zu Zeichenfolgen von Bits zuweist, wobei mindestens ein Abschnitt der zugewiesenen Marker eine kleinere Größe hat als die Zeichenfolgen von Bits, denen sie zugewiesen sind, und wobei der Frequenzwandler kleinere Marker Rohdaten zuweist, von denen erwartet wird, dass sie häufiger auftreten; und
ii. bestimmt, ob der generierte Hashwert ein Doppel eines gespeicherten Hashwerts in der Hashwerttabelle ist, der einer gespeicherten Puffereinheit zugeordnet ist, und wenn dies der Fall ist, bestimmt, ob ein Konflikt vorhanden ist, wobei der Konflikt als ein Hashwert definiert ist, der zwei verschiedenen Puffereinheiten zugeordnet ist, und wenn ein Konflikt vorhanden ist, die Hashwerttabelle aktualisiert, um den Hashwert in der Hashwerttabelle zu veranlassen, sich der benutzerseitig bereitgestellten Puffereinheit und nicht der nicht gespeicherten Puffereinheit zuzuordnen;
(c) ein Nicht-Cache-Aufzeichnungsmedium, wobei das nicht-Cache-Aufzeichnungsmedium für eine Speicherung auf Blockebene konfiguriert ist; und
(d) eine Mittlereinheit, wobei die Mittlereinheit eine Korrelation einer wahren logischen Blockadresse mit einer benutzerseitig wahrgenommenen logischen Blockadresse speichert.

10. System nach Anspruch 9, wobei das Computerprogramm die benutzerseitig bereitgestellte Puffereinheit nur in das Nicht-Cache-Aufzeichnungsmedium schreibt, wenn:
i. entweder der generierte Hashwert kein Doppel des Hashwerts in der Hashwerttabelle ist; oder
ii. der generierte Hashwert ein Doppel eines gespeicherten Hashwerts ist und ein Konflikt vorhanden ist.

11. System nach Anspruch 9, wobei für eine Mehrzahl von Benutzerdateien Korrelationen von benutzerseitig wahrgenommenen logischen Blockadressen und wahren logischen Blockadressen vorhanden sind, und in einer Mehrheit von Korrelationen für verschiedene Daten eine oder mehrere derselben wahren logischen Blockadressen, aber verschiedene benutzerseitig wahrgenommene logische Blockadressen vorhanden sind.

12. System nach einem der Ansprüche 9 bis 11, ferner aufweisend ein Abrufmodul, wobei das Abrufmodul konfiguriert ist, um eine Datendatei wiederherzustellen, indem auf die Mittlereinheit zugegriffen wird und eine Mehrzahl von Puffereinheiten erneute in einer Reihenfolge kombiniert wird, die durch die Mittlereinheit vorgegeben wird, ohne auf eine Hashwerttabelle zuzugreifen, und wobei die von der Mittlereinheit vorgegebene Reihenfolge sich von der Reihenfolge der Puffereinheiten auf dem Nicht-Cache-Aufzeichnungsmedium unterscheidet.

13. Durch einen Computer lesbares Programm, wobei das Computerprogrammprodukt einen ausführbaren Code aufweist, der bei Ausführung auf einem Computer den Computer veranlasst, ein Verfahren nach Anspruch 1 bis 8 umsetzen.

## Revendications

1. Procédé de stockage de données sur un support d'enregistrement à mémoire non cache, le procédé comprenant :
i. la réception (110) d'instructions pour écrire des données sur un support d'enregistrement à mémoire non cache, lesdites instructions comprenant une adresse de bloc logique perçue par l'utilisateur et une mémoire tampon fournie par l'utilisateur ;
ii. la division (120) de la mémoire tampon fournie par l'utilisateur en unités de mémoire tampon fournie par l'utilisateur, les unités de mémoire tampon fournie par l'utilisateur étant générées par l'utilisation d'un tableau de marqueurs de bits ou convertisseur de fréquence, ledit marqueur de bits attribuant des marqueurs à des chaînes de bits, au moins une partie des marqueurs attribués étant plus petits en taille que les chaînes de bits auxquelles ils sont attribués, et ledit convertisseur de fréquence attribuant des marqueurs plus petits à des données brutes qui sont censées apparaître plus fréquemment ;
iii. l'application (120) d'une fonction de hachage cryptographique à chaque unité de mémoire tampon fournie par l'utilisateur, ce qui permet de générer une valeur de hachage générée pour chaque unité de mémoire tampon fournie par l'utilisateur ;
iv. l'activation (130) d'un produit de programme informatique qui comprend un algorithme qui incite le produit de programme informatique à accéder à un tableau de valeurs de hachage et à déterminer si chaque valeur de hachage générée est un double d'une valeur de hachage dans un tableau de valeurs de hachage, ledit tableau de valeurs de hachage associant chacune d'une pluralité de valeurs de hachage stockées à une unité de mémoire tampon stockée différente, et une vraie adresse de bloc logique ; et
A. si la valeur de hachage générée ne se trouve pas dans le tableau de valeurs de hachage, alors l'écriture (140) de l'unité de mémoire tampon fournie par l'utilisateur sur un bloc dans le support d'enregistrement à mémoire non cache, la mise à jour du tableau de valeurs de hachage pour inclure une corrélation de l'unité de mémoire tampon fournie par l'utilisateur, la valeur de hachage générée et une vraie adresse de bloc logique à laquelle l'unité de mémoire tampon fournie par l'utilisateur est stockée, et la mise en corrélation sur un médiateur de la vraie adresse de bloc logique qui correspond à l'endroit où la mémoire tampon fournie par l'utilisateur a été écrite et de l'adresse de bloc logique perçue par l'utilisateur pour la mémoire tampon fournie par l'utilisateur ; et
B. si la valeur de hachage générée est un double d'une valeur de hachage stockée au sein du tableau de valeurs de hachage, l'interrogation (170) pour savoir s'il existe un conflit, un conflit étant défini comme étant la circonstance dans laquelle la même valeur de hachage est associée à une unité de mémoire tampon stockée et à l'unité de mémoire tampon fournie par l'utilisateur, et l'unité de mémoire tampon stockée et l'unité de mémoire tampon fournie par l'utilisateur ayant des valeurs différentes, et
a. s'il existe un conflit, l'écriture (140, 240) de l'unité de mémoire tampon fournie par l'utilisateur sur un bloc dans le support d'enregistrement à mémoire non cache, la désactivation ou la suppression d'une association au sein du tableau de valeur de hachage entre l'unité de mémoire tampon stockée et la valeur de hachage stockée, la mise à jour du tableau de valeurs de hachage pour inclure une corrélation de l'unité de mémoire tampon fournie par l'utilisateur, de la valeur de hachage générée et d'un vraie adresse de bloc logique à laquelle l'unité de mémoire tampon fournie par l'utilisateur est stockée, et l'écriture sur le médiateur de la vraie adresse de bloc logique qui correspond à l'endroit où l'unité de mémoire tampon fournie par l'utilisateur a été écrite et de l'adresse de bloc logique perçue par l'utilisateur, et
b. s'il n'existe pas de conflit, l'écriture (160) sur le médiateur de la vraie adresse de bloc logique d'une unité de mémoire tampon stockée sur le support d'enregistrement à mémoire non cache qui est la même que l'unité de mémoire tampon générée par l'utilisateur et sa mise en corrélation avec l'adresse de bloc logique perçue par l'utilisateur pour la mémoire tampon fournie par l'utilisateur sans écrire l'unité de mémoire tampon fournie par l'utilisateur sur le support à mémoire non cache.

2. Procédé selon la revendication 1, comprenant en outre la répétition de (iii) à (iv) pour chacune d'une pluralité d'unités de mémoire tampon fournie par l'utilisateur, collectivement ladite pluralité d'unités de mémoire tampon fournie par l'utilisateur correspondant à un fichier.

3. Procédé selon la revendication 1, dans lequel la mémoire tampon fournie par l'utilisateur se compose de 512 Bytes à 2 MB

4. Procédé selon la revendication 1, dans lequel pour une adresse de bloc logique perçue par l'utilisateur, le médiateur met en corrélation la même vraie adresse de bloc logique plusieurs fois.

5. Procédé selon la revendication 1, dans lequel l'unité de mémoire tampon fait 512 B ou 4 K en taille.

6. Procédé selon la revendication 5, dans lequel la valeur de hachage fait 8 Bytes ou 16 Bytes en taille.

7. Procédé selon la revendication 1, dans lequel les unités de mémoire tampon fournie par l'utilisateur sont formées par prétraitement, ledit prétraitement comprenant : (i) la réception d'une pluralité de signaux binaires numériques, lesdits signaux binaires numériques étant organisés en une pluralité de petits segments, chaque petit segment faisant N bits de long, N étant un nombre entier supérieur à 1 et lesdits petits segments ayant un ordre ; (ii) l'attribution d'un marqueur à chaque petit segment provenant d'un ensemble de X marqueurs pour former un ensemble d'une pluralité de marqueurs, X étant inférieur ou égal au nombre de combinaisons différentes de bits au sein d'un petit segment, les sous-unités identiques se voyant attribuer le même marqueur ; et (iii) l'utilisation des marqueurs comme unités de mémoire tampon.

8. Procédé selon la revendication 1, dans lequel les unités de mémoire tampon fournie par l'utilisateur sont formées par prétraitement, ledit prétraitement comprenant : (i) la réception d'une pluralité de signaux binaires numériques, lesdits signaux binaires numériques étant organisés en une pluralité de petits segments, chaque petit segment faisant N bits de long, N étant un nombre entier supérieur à 1 et lesdits petits segments ayant un ordre ; (ii) la division de chaque petit segment en sous-unités de taille uniforme et l'attribution d'un marqueur à chaque sous-unité provenant d'un ensemble de X marqueurs pour former un ensemble d'une pluralité de marqueurs, X étant inférieur ou égal au nombre de combinaisons différentes de bits au sein d'une sous-unité, les sous-unités identiques se voyant attribuer le même marqueur ; et (iii) l'utilisation des marqueurs comme unités de mémoire tampon.

9. Système de stockage de données, ledit système comprenant :
(a) une mémoire persistante, ladite mémoire persistante stockant un tableau de valeurs de hachage qui est configuré pour associer une unité de mémoire tampon stockée à une valeur de hachage stockée et une vraie adresse de bloc logique ;
(b) une unité centrale de traitement qui comprend ou est couplée fonctionnellement à un produit de programme informatique qui est stocké dans un support non transitoire, ledit produit de programme informatique comprenant un code exécutable qui lorsqu'il s'exécute, automatiquement,
i. applique un algorithme de valeurs de hachage à chacune des une ou plusieurs unités de mémoire tampon fournie par l'utilisateur pour générer une valeur de hachage générée, les unités de mémoire tampon fournie par l'utilisateur étant générées par l'utilisation d'un tableau de marqueurs de bits ou convertisseur de fréquence, ledit marqueur de bits attribuant des marqueurs à des chaînes de bits, au moins une partie des marqueurs attribués étant plus petits en taille que les chaînes de bits auxquelles ils sont attribués, et ledit convertisseur de fréquence attribuant des marqueurs plus petits à des données brutes qui sont censées apparaître plus fréquemment ; et
ii. détermine si la valeur de hachage générée est un double d'une valeur de hachage stockée au sein du tableau de valeurs de hachage qui est associé à une unité de mémoire tampon stockée, et si tel est le cas, détermine si un conflit existe, ledit conflit étant défini comme étant une valeur de hachage associée à deux unités de mémoire tampon différentes et si un conflit existe, mettant à jour le tableau de valeurs de hachage pour provoquer l'association de la valeur de hachage dans le tableau de valeurs de hachage à l'unité de mémoire tampon fournie par l'utilisateur et non à l'unité de mémoire tampon stockée ;
(c) un support d'enregistrement à mémoire non cache, ledit support d'enregistrement à mémoire non cache étant configuré pour le stockage de niveau bloc ; et
(d) un médiateur, ledit médiateur stockant une corrélation d'une vraie adresse de bloc logique avec une adresse de bloc logique perçue par l'utilisateur.

10. Système selon la revendication 9, ledit programme informatique écrivant l'unité de mémoire tampon fournie par l'utilisateur sur le support d'enregistrement à mémoire non cache uniquement si :
i. soit la valeur de hachage générée n'est pas un double de la valeur de hachage dans le tableau de valeur de hachage ; soit
ii. la valeur de hachage générée est un double d'une valeur de hachage stockée, et qu'il existe un conflit.

11. Système selon la revendication 9, dans lequel pour une pluralité de fichiers utilisateur, il existe des corrélations d'adresses de blocs logiques perçues par l'utilisateur et de vraies adresses de blocs logiques, et dans une pluralité de corrélations pour différents fichiers il existe une ou plusieurs des mêmes vraies adresses de blocs logiques mais différentes adresses de blocs logiques perçues par l'utilisateur.

12. Système selon l'une quelconque des revendications 9 à 11, comprenant en outre un module de récupération, ledit module de récupération étant configuré pour reconstituer un fichier de données en accédant au médiateur et en recombinant une pluralité d'unités de mémoire tampon dans un ordre dicté par le médiateur sans accéder à un tableau de valeurs de hachage et ledit ordre dicté par le médiateur étant différent de l'ordre des unités de mémoire tampon sur le support d'enregistrement à mémoire non cache.

13. Programme lisible par ordinateur, ledit produit de programme informatique comprenant un code exécutable qui, lorsqu'il est exécuté sur un ordinateur, provoque la mise en œuvre par l'ordinateur d'un quelconque procédé selon les revendications 1 à 8.
